(19)

**Europäisches Patentamt**
**European Patent Office**
**Office européen des brevets**

(11) **EP 4 427 876 A1**

(12) **EUROPEAN PATENT APPLICATION**

(43) Date of publication:
**11.09.2024 Bulletin 2024/37**

(21) Application number: **24157285.8**

(22) Date of filing: **13.02.2024**

(51) International Patent Classification (IPC):
**B23K 26/00** (2014.01)   **B23K 26/03** (2006.01)
**B23K 26/0622** (2014.01)   **B23K 26/06** (2014.01)
**B23K 26/53** (2014.01)   **B23K 31/12** (2006.01)
**B23K 101/00** (2006.01)   **B23K 26/55** (2014.01)
**B23K 103/00** (2006.01)   **B23K 26/60** (2014.01)

(52) Cooperative Patent Classification (CPC):
**B23K 26/53; B23K 26/0006; B23K 26/032;**
**B23K 26/0622; B23K 26/0626; B23K 26/55;**
**B23K 26/60; B23K 31/12;** B23K 2103/42

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.02.2023 EP 23159014**

(71) Applicant: **Humboldt-Universität zu Berlin**
**10099 Berlin (DE)**

(72) Inventors:
• **GUNDOGDU, Sinan**
**12489 Berlin (DE)**
• **PAZZAGLI, Sofia**
**12053 Berlin (DE)**
• **SCHRÖDER, TIM**
**12051 Berlin (DE)**

(74) Representative: **Fischer, Uwe**
**Patentanwalt**
**Moritzstraße 22**
**13597 Berlin (DE)**

(54) **3D DIRECT LASER WRITING**

(57) The invention relates to a method for modifying the refractive index characteristics of a target material (5) by targeting a specific region within the target material (5), the method comprising the step of generating laser light with a QCW laser (1) and focussing the laser light inside the target material (5). According to the invention the material modification occurring at a focal spot (13) of the laser light is monitored in real time by an imaging system (7) and laser (1) power settings of the laser (1) are adjusted in real time to achieve a desired refractive index change.

Fig. 23

EP 4 427 876 A1

**Description**

Background of the invention

The invention relates to a method and system for modifying the refractive index characteristics of a target material by targeting a specific region within the target material.

The refractive index characteristics of transparent plastics/resins can be modified at a microscopic level by targeting a specific region within the material using high-intensity femtosecond-pulse lasers. This intense energy creates multiphoton photochemical reactions, resulting in refractive index variations of around 0.1%. While this level of contrast is sufficient for creating functionalized optical fibers (e.g. fiber Bragg gratings) and integrated photonic elements (such as optical waveguides or holograms for information storage), higher contrast is needed for miniaturized and integrated photonics, where control over the size of the evanescent tails of the supported electromagnetic modes is essential. Additionally, the high costs and large size of the high-intensity femtosecond-pulse lasers used in this process limit its scalability and can impede the innovation and commercial potential of integrated photonics based on transparent materials.

Objective of the present invention

An objective of the present invention is to propose an improved method and an improved system for modifying the refractive index characteristics of a transparent plastic material.

Brief summary of the invention

An embodiment of the present invention relates to a method for modifying the refractive index characteristics of a target material by targeting a specific region within the target material, the method comprising the step of generating laser light with a laser and focussing the laser light inside the target material. According to the invention, the material modification occurring at a focal spot of the laser light is monitored in real time by an imaging system and laser power settings of the laser are adjusted in real time to achieve a desired refractive index change.

The invention exploits the time-dependent changes in the linear absorption coefficient of the material to generate a localized modification of the refractive index. First numerical results show refractive index modifications up to 12%, so significantly more than the above mentioned 0,1%. Since the radiation from the spot is monitored, in situ, the fabrication process can be stabilized. In other words, by using the radiation from the spot and time dynamics of the radiation to characterize the absorption of the laser radiation in the material and collection efficiency of the objective, the laser power may then be compensated and set to optimal values in real time.

According to a preferred embodiment, the laser is operated in a quasi-continuous mode to adjust the laser power settings in real time. The use of quasi-continuous-wave (QCW) lasers for localized annealing is a promising method for inducing controlled modifications to the refractive index of specific transparent plastics and resins. The affordability and compact size of QCW lasers make this process ideal for both rapid prototyping and mass production of customized optical and photonic devices. By moving the laser focal spot in three dimensions within the material, complex patterns of refractive index modification can be created, enabling the fabrication of optical components such as flat lenses, and integrated photonic elements such as optical waveguides, gratings, and holograms. Proximity effects that can occur when exposing nearby regions with identical QCW laser settings, leading to unpredictable variations in the refractive index modification along the pattern trajectory, are coped with by monitoring the material modification occurring at the focal spot in real time and adjusting the laser power settings of the laser also in real time, as discussed above.

The laser light is preferably generated by a continuous wave laser which is modulated on a time scale longer than one nanosecond. The adjustment of the laser power can be achieved by modifying the amplitude of the radiation and/or the duty-cycle of the radiation emission, i.e. by increasing or decreasing the length of the lasing periods with respect to the length without emission.

The image system preferably detects radiation from the laser's focal point.

Software that may be implemented in the image system, preferably continuously analyses the peak intensity and/or the width of the spot size of the detected radiation and adjusts in real time the laser power settings of the laser.

The software may follow a given characteristic curve that is used to adjust the laser settings along the whole of a given 3D pattern.

The radiation detected by the imaging system may be or at last may include fluorescence resulting from the local annealing and/or from the refractive index modification induced at the laser's focal point.

The radiation detected by the imaging system may be or at last may include scattered laser light resulting from the local annealing and/or from the refractive index modification induced at the laser's focal point.

The radiation detected by the imaging system may be or at last may include detected radiation originating from an additional radiation source. The detected radiation that originates from the additional radiation source has preferably passed the focus point before the detection by the image system.

According to a preferred embodiment of the invention, the method may further comprise the steps of carrying out a numerical simulation to model the laser light as a moving Gaussian beam, which causes a modelled temperature rise in the target material around the laser's focal spot due to optical absorption, wherein the modelled temperature rise induces a modelled modification of the target material and wherein the modelled modification of the target material is calculated using the Arrhenius equation, and selecting the laser power settings in view of the results of the numerical simulation.

The modification of the refractive index may be caused by a temperature rise of the target material in response to the laser light absorption at the laser's focal spot.

The laser may be a diode laser. The wavelength of the laser light is preferably chosen to be at the band gap edge of the target material. The laser may for instance generate blue or ultraviolet light.

The laser peak power is preferably below 1 W. The laser fluence is preferably below 1 mJ/pm2.

The laser power is preferably increased with increasing depth of the focal point inside the target material according to a pre-defined mathematical calibration function.

The absorption characteristic curve of the material preferably has an absorption band edge that non-linearly shifts to longer wavelengths with annealing time and temperature according to Arrhenius equation.

The wavelength of the laser light is preferably chosen to be at or above the initial absorption band edge (i.e. the absorption band edge before the writing process is started). The wavelength of the laser light is preferably not changed during the writing process.

A further embodiment of the invention relates to a system configured to modify the refractive index characteristics of a target material, the system comprising a laser for targeting a specific region within the target material. According to the invention, an image system configured to monitor the material modification occurring at the laser's focal spot in real time and an adjustment unit configured to adjust the laser power settings of the laser in real time in response to the monitored material modification in order to achieve a desired refractive index change.

All features as described above in connection with the embodiments of the method can also be included in said system. In other words, all features listed in the description and in the dependent claims that refer to the method, may also be considered as disclosed subject matter regarding the system.

## Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings.

## Detailed description of the preferred embodiments

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

## 3D Direct Laser Writing without Femtosecond Lasers, Photonic 3D Printer

Hereinafter, we demonstrate a method that uses a low-power QCW diode laser to write 3D, sub-wavelength features in a transparent plastic material such as PADC, PDMS and PVA. To achieve this, we exploit the time-dependent changes in the linear absorption coefficient of the material to generate a localized modification of the refractive index, expected to be up to 12%. We present an analytical model for material modification, simulation results, and experimental results, as well as a technique for in-situ characterization of the material modification. We monitor the photoluminescence and/or scattering from the spot, in situ, to stabilize our fabrication process. We use the photoluminescence and/or scattering from the spot and time dynamics of the photoluminescence and/or scattering to characterize the absorption of the laser in the material and collection efficiency of the objective, which is then used to compensate the laser power.

Transparent plastics and resins hold significant potential in the field of photonics, thanks to their high availability and low cost of raw materials when compared to traditional silicon and semiconductor-based solutions. With respect to glass, plastics have lower thermal conductivity and are less brittle, making them more suitable for several applications.

To fully harness this potential, new techniques must be developed to induce permanent, microscopic modifications in these materials in a controlled and repeatable manner. The ideal process should be both efficient and easily scalable using compact, modular instruments.

The use of QCW lasers for localized annealing is a promising method for inducing controlled modifications to the refractive index of specific transparent plastics and resins. The affordability and compact size of QCW lasers make this process ideal for both rapid prototyping and mass production of customized optical and photonic devices. By moving the laser focal spot in three dimensions within the material, complex patterns of refractive index modification can be created, enabling the fabrication of optical components such as flat lenses, and integrated photonic elements such as optical waveguides, gratings, and holograms. However, proximity effects can occur when exposing nearby regions with identical QCW laser settings, leading to unpredictable variations in the refractive index modification along the pattern trajectory.

Direct laser writing of optical structures

Common methods of direct laser writing for photonics are femtosecond laser writing and photopolymerization. Both of these are two-photon mechanisms requiring femtosecond lasers.

Method of Operation

Use a laser at the band-gap edge of the material absorption curve

Material is chemically modified according to the Arrhenius equation

Absorbance increases proportionally to material modification resulting in localized refractive index change.

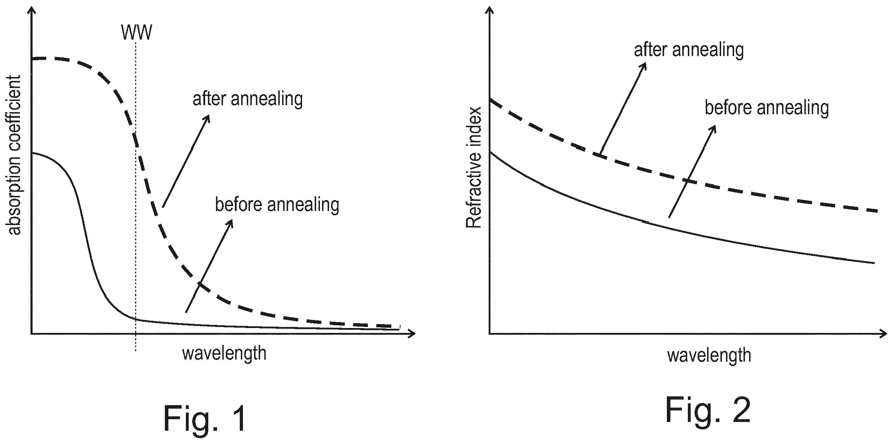

The working principle is depicted in Figures 1 and 2. Figure 1 shows that annealing reduces the bandgap. Figure 2 shows that annealing increases the refractive index.

Modelling of annealing using a moving laser beam.

We can use Arrhenius equation to describe the change of absorption coefficient of a material suitable for our QCW laser writing process, such as for example PDCA:

$$\ln \frac{\Delta k}{\Delta t} = -\frac{E_a}{T} + \ln A$$

Where $\Delta t$ is the annealing time, $E_a$ is the activation energy, T is the annealing temperature and A is a constant. The equation for the rate of change for k is:

$$\frac{\partial k}{\partial t} = A\, e^{-\frac{E_a}{T}}$$

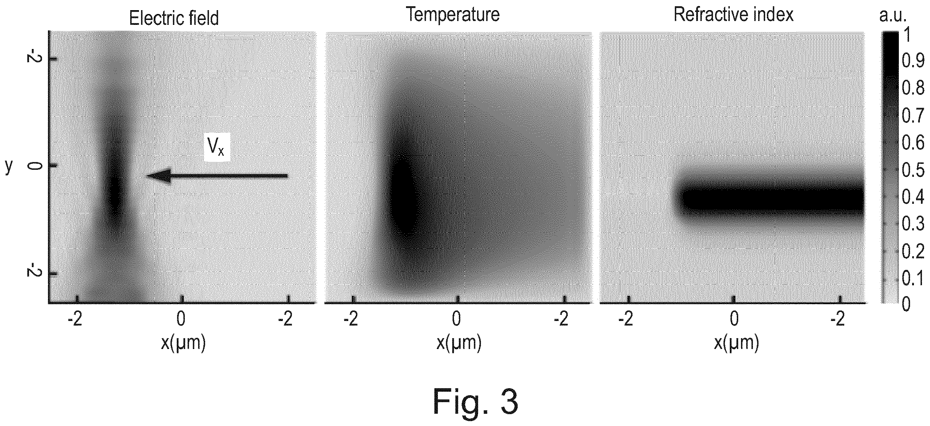

We model the moving laser beam inside the material using Helmholtz wave equation for Gaussian beam. Figure 3 shows the simulated refractive index change profile of the material due to a moving laser beam. We used the optical power absorbed by the material as a heat source in the simulation and solved the heat equation to calculate the temperature rise. Then we used the temperature rise to calculate the absorption coefficient change of the material. From the absorption coefficient, we find the refractive index by interpolating the data from the literature.

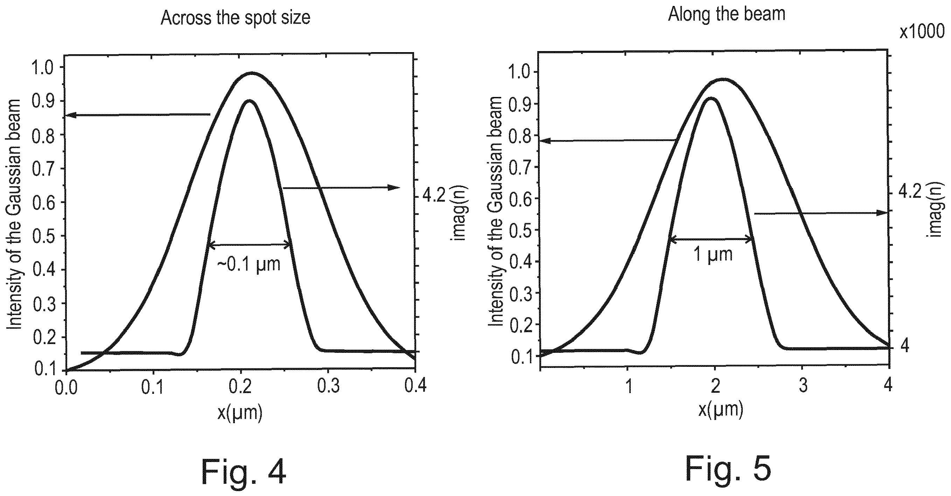

Figures 4 and 5 show the intensity of the Gaussian beam with respect to the position in the material, and the absorption coefficient (imag(n), imaginary part of the refractive index). Both images show that the modified zone can be smaller than the spot size, beating the diffraction limit.

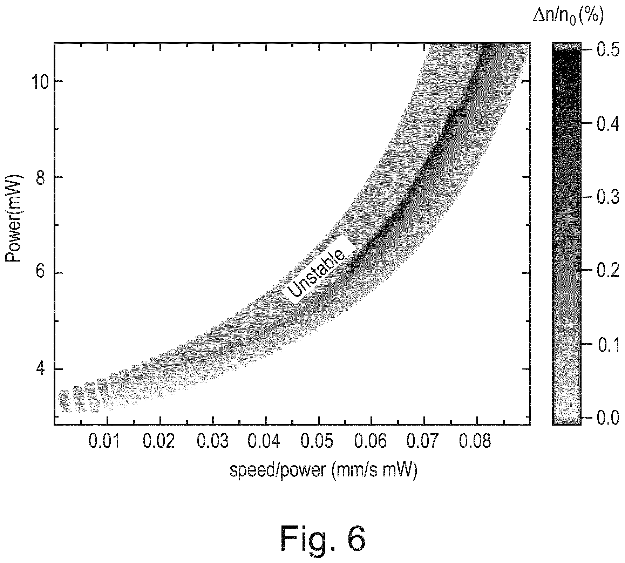

Figure 6 shows the effect of the optical power, and the speed of the laser writing on the refractive index change. For this simulation we look for steady state solution, which does not change in time. As expected for low powers, refractive index change is low. It quickly starts to increase as the power get higher. For a given speed, as the optical power increases, the writing process becomes unstable at some point, and we cannot fin a steady state solution. This means, the material is very likely starts absorbing the light more and more until it is damaged. But, right before the process gets unstable, there is a stable power/speed combination where 0.5% refractive index change is achieved, without any active stabilization method.

Data used for the above numerical simulation are taken from: V. Kumar et. al, Radiation Effects and Defects in Solids 166, 109-113 (2011).

Writing of continuous lines and instabilities

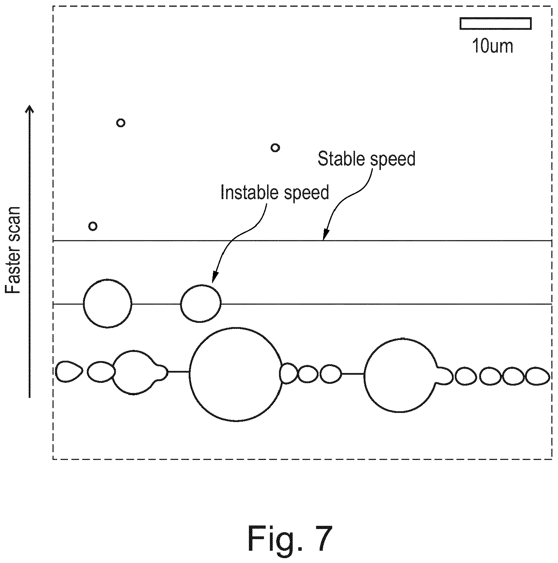

Figure 7 shows optical image of the laser written lines and the instabilities that may occur during the writing process. Here, we fixed the laser power and move the stage linearly in one axis, perpendicular to the laser beam, at varying speeds. At slower speeds, we see large round defects. An optimal speed can be found to allow imprinting of lines with well-defined and homogeneuous width and without macroscopic defects, which can be used for example as a optical waveguides. At higher speeds, the material modification is hard to observe by standard transmission microscopy.

Characteristic curves

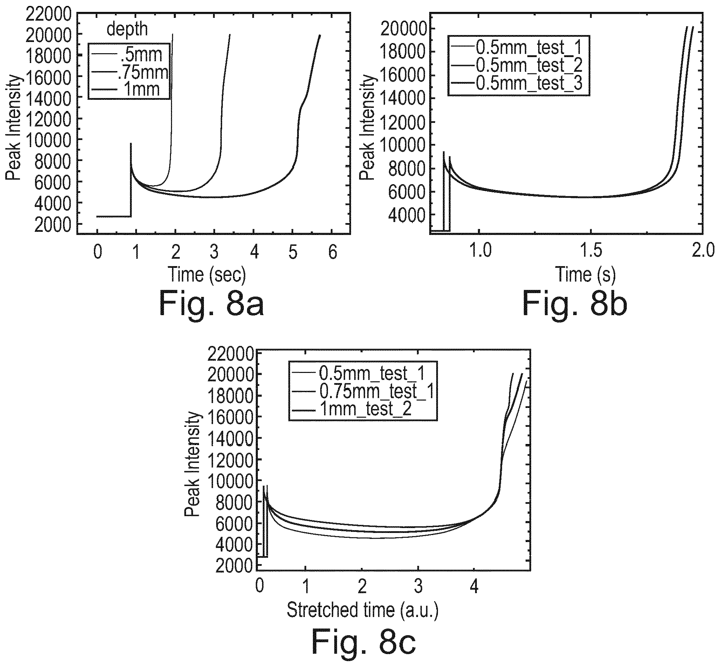

We measure the characteristic curves of the laser writing by monitoring the photoluminescence and/or scattering from the focal spot using the camera. We calculate the intensity of the spot also, the width of the spot in time. Figure 8a shows the peak intensity of the spot for the same laser power, without moving the stage. Three curves are for different focusing depths inside the material. Just below 1 sec, the laser is turned on and there is a sharp rise in the signal. Then the signal exponentially decreases. After some time, it exponentially increases again. When the laser is focused deeper into the material, the whole process slows down because the material starts absorbing the laser and therefore less power can reach into the depth of the sample. This can be used to compensate the optical power reaching to the focal spot. Basically, one can increase the optical power so that the timing of the curves is equal.

We believe the initial drop of the signal is due to actual refractive index change due to heating as described in our simulation. The signal reaches a minimum which may indicate that the refractive index change is saturated. We believe the second rise of the signal is due to another mechanism, such as partial carbonization or decomposition of the material. This causes stronger absorption, and the annealed spot grows quickly. After this, the annealed spot becomes strongly photoluminescent and/or a scattering point.

Let us note that for optical waveguides that operate in the visible regime, photoluminescence is an unwanted feature. Therefore, the ideal writing parameters for the material are chosen from the minimum of the curve. For application for which photoluminescence is not a problem, one can use the writing parameters corresponding to the point at which the curve is rising exponentially.

Peak Intensity vs the second moment

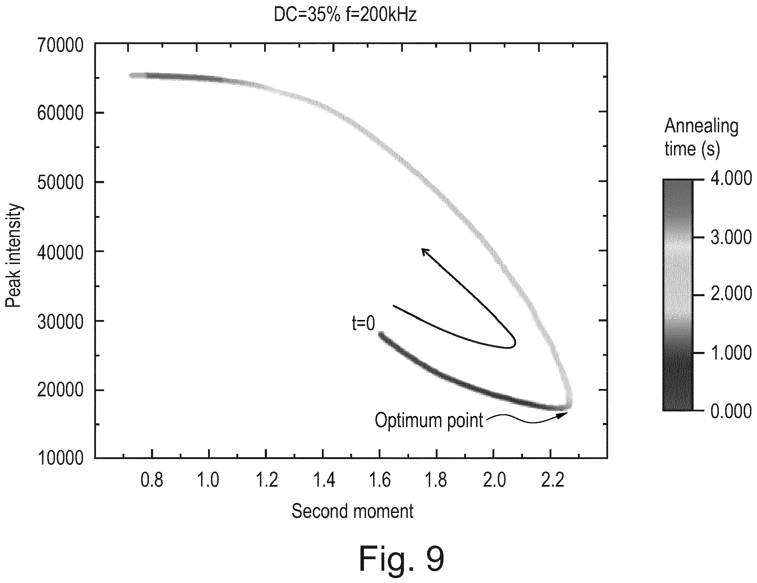

Figure 9 shows the change of the peak intensity of the photoluminescence and/or scattering signal and its second moment. Second moment is calculated from a 30x30 pixel image around the focal spot and inversely proportional to the spot size. Annealing starts at t=0 and moves along the arrow. At a certain time, there is an optimum point at which the peak intensity and spot size is minimum. This is the optimum point at which the refractive index change is saturated, but the spot does not produce a strong photoluminescence and/or scattering signal. This is the ideal case for writing lines, i.e. closely packed dots.

Photonic Physical Unclonable Function

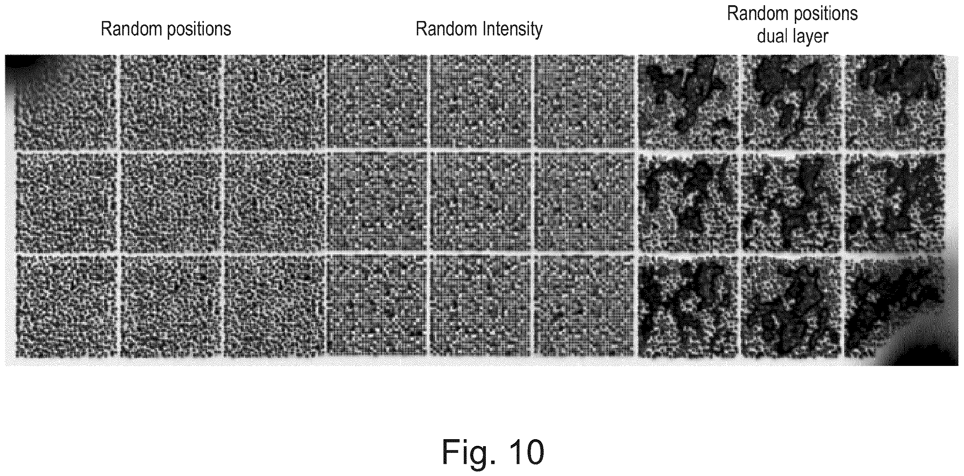

Figure 10 shows one application of the writing process. It is a prototype of a photonic physical unclonable function (PUF) we fabricated inside PADC. It is basically, a grid of dots inside the material composed of randomized positions or intensities. Each square is 100 microns wide. One can shine a laser into these patterns and measure the speckle pattern to identify uniqueness of the PUF. It can be used for counterfeit prevention.

Software structure

Below are the units of the control software we are developing.

    1. Low level controls

        · Camera control
        · Motion control
        · Laser control

    2. Research tools

        · Real time image & motion
        · Save video to file

· Measure characteristic curve
· File to dot array
· Confocal imaging
· Auto focus top surface

3. G-code writer

· Read g-code and write dots, and lines

4. Web server

· Interface to upload g-code and run

5. Design API

· Dots
· Open lines
· Closed lines
· Area
· Volume

Fitting to the characteristic curves

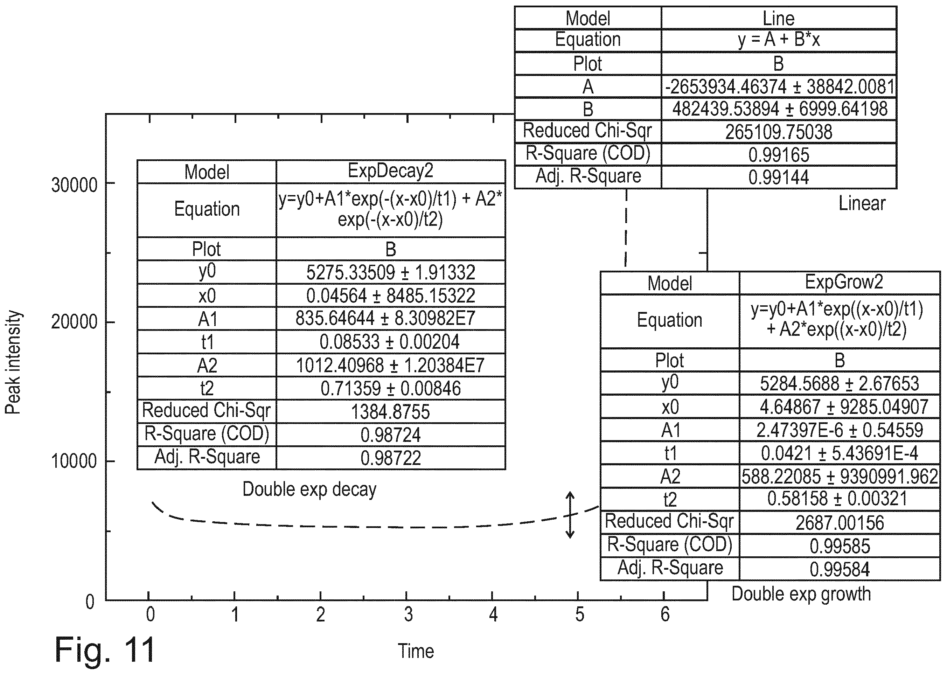

Figures 11 show the peak intensity over time and the fitted function. One can split the curve into two parts and fit a double exponential function to them separately. Initially the intensity decays while after a time starts to increase. Fig-ure 12 shows the time constant of the growing exponential as a function of the duty cycle, demonstrating that the material modification is faster at higher duty cycles.

Second moment vs time

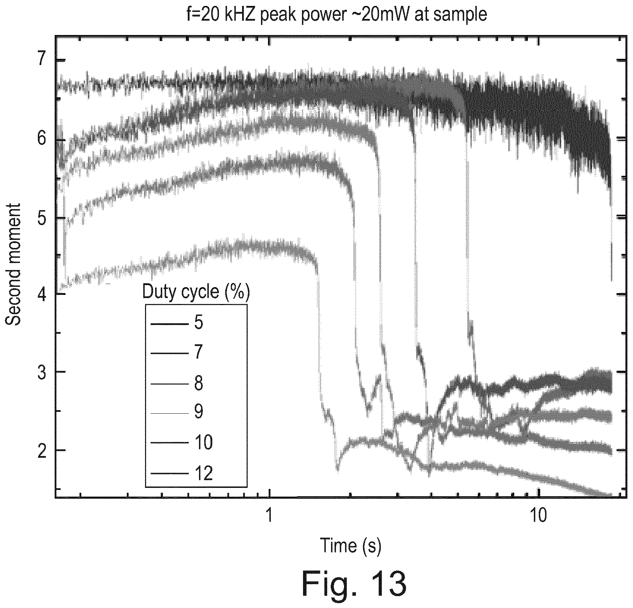

Figure 13 shows the spot's second moment during annealing. The second moment is inversely proportional to the post size. Initially, the second moment gets higher, which means the spot becomes smaller, and then the spot grows abruptly.

Measurement of phase images

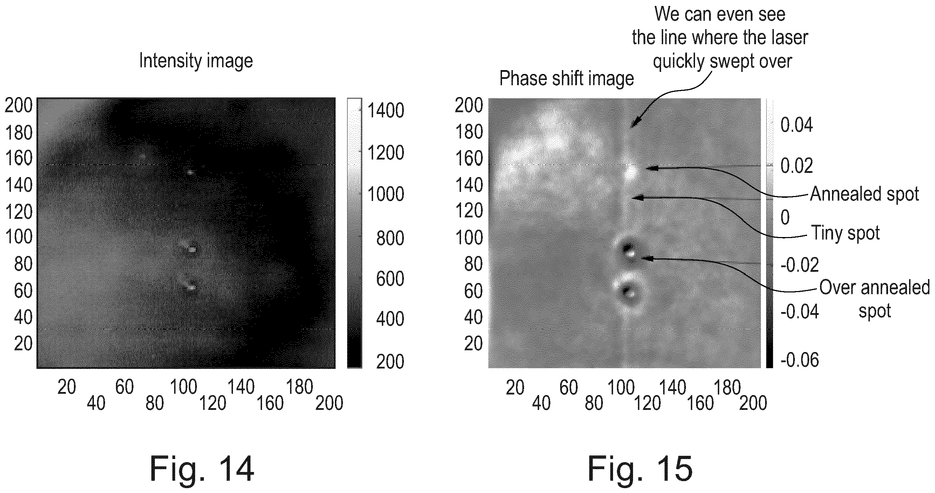

We can measure the phase shift of light due to modified zones in the material in following way (see Figures 14 and 15):

1. Polish the sides of the glass
2. Draw a linear array of dots 1 mm deep, 1 mm from the edge.
3. Take two microscope images with transmission illumination with slightly shifted focus
4. Calculate the phase image using the equation:

$$\phi(\vec{r}, 0) = -k \frac{1}{I_0} \nabla_\perp^{-2} \frac{\partial I(\vec{r}, 0)}{\partial z} \ .$$

5. Repeat the measurement from the side view of the patterns.

More detail on the phase shift imaging technique can be found in the reference: https://journals.aps.org/prl/pdf/10.1103/PhysRevLett.80.2586

Measurement of material loss using photoluminescence and/or scattering

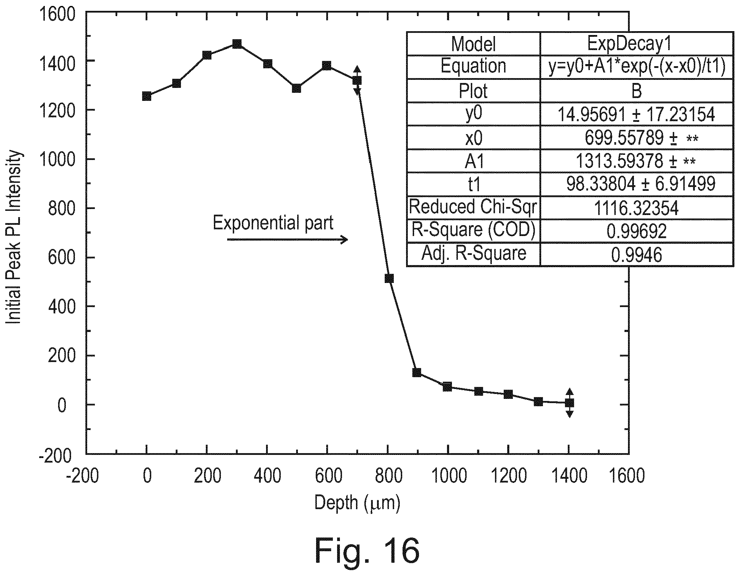

Initial peak photoluminescence and/or scattering intensity exponentially depends on the focusing depth. By fitting the data, we can extract the coefficient of loss at the laser wavelength. Light collection efficiency may also depend on the focusing depth (see Figure 16).

Exemplary embodiment of the invention

An exemplary embodiment of the invention is directed to utilize low peak power QCW lasers to create permanent changes in the refractive index of transparent solid materials. For materials exhibiting heat-dependent characteristics, a laser with suitable characteristics (wavelength, power, intensity modulation) can induce a refractive index contrast higher than 10% at the focal point. An additional advantage of our technique is that it allows for the use of low peak power and low-cost diode lasers, making it a cost-effective and highly scalable method for the fabrication of practical devices.

An exemplary embodiment of the invention uses an instrument driven by a control-loop mechanism that preferably continuously performs:

  1. read-out and analysis of the real-time modification of the refractive index induced by a QCW-laser focused inside a transparent material (and thereby causing local annealing)
  2. adjust the QCW-laser settings to maintain the same refractive index modification along an arbitrary 3D pattern inside the material.

The advantage is the mitigation of the proximity effects occurring when locally annealing neighbouring target areas to realize complex 2D or 3D microstructures.

Since the material used has optical absorption at the writing wavelength, as we focus the laser deeper into the material, we need to increase the laser power to achieve the same results. The optical power depending on the depth is given as

$$P(z) = P_0 * e_1(z) \qquad (1)$$

Here, $P_0$ is the writing laser power at the top surface. $e_1(z)$ is a function describing the dependence of power on the depth of the focus, and z is the depth of the focal spot from the surface. On the microscope image, we integrate the total intensity at the laser spot, which gives us the total measured photoluminescence and/or scattering intensity as a function of depth, $I(z)$. The relationship between $I(z)$ and $P(z)$ is

$$I(z) = P(z) * e_2(z) = P_0 * e_1(z) * e_2(z) \qquad (2)$$

where $e_2(z)$ is the collection efficiency of the objective as a function of depth. $e_1(z)$ and $e_2(z)$ functions depend on the material and the optical components used in the system. These functions need to be calibrated for accurate power control at various depths of the material. To do this, we first measure $P_0$ at the surface of the material, then measure $I(z)$ using a low laser power in a short time, so that material is not modified. This gives us the product

$$e_1(z) * e_2(z) = P_0/I(z). \qquad (3)$$

Then we preferably set the laser power to a high value so that it modifies the material. Then we measure $I_0(t) = I(z,t)$ at a depth close to the surface, now also as a function of time. Then we focus deeper into the material and measure $I(z,t)$ again and adjust the power so that the $I(z,t)$ is the same as $I_0(t)$. Three photoluminescence and/or scattering signals from different depths are shown in Fig. 8a. These signals are similar, but the time scales, $t_1$, and $t_2$ are different. We increase the power at the deeper spot so that the signals overlap. At this compensated power, we know that the optical powers that reach the spots are the same, so that:

$$corr(z) * P(z_1) = corr(z) * P(z_2) = P_0 \qquad (4)$$

where corr(z) is the depth-dependent power correction function we measure.

Using (4) and (1), we find

$$e_1(z) = 1/corr(z) \quad (5)$$

using (3) and (5) we find

$$e_2(z) = corr(z) * P_0/I(z) \quad (6)$$

To summarize, by measuring the photoluminescence and/or scattering intensity as a function of depth and time, we can find both $e_1(z)$ and $e_2(z)$ functions, which are required for correcting the applied optical power and measured photoluminescence and/or scattering intensity for depth. Then we compensate the power using these functions:

$$P_{corr}(z) = P_0/e_1(z)$$

Where $P_{corr}(z)$ is the depth compensated power. We correct the measured photoluminescence and/or scattering intensity using

$$I_{corr}(z,t) = P_{corr}(z) / e_2(z)$$

$I_{corr}(z,t)$ is the depth-corrected photoluminescence and/or scattering intensity.

Then, we use $I_{corr}(z,t)$ to monitor the modification of the material precisely and independently of the focusing depth. Here are two examples of how we use it to control modification of the material:

1. We preferably turn on the laser and turn it off again when $I_{corr}(z,t)$ reaches a target value. This way, we write a 'dot' inside the material.

2. We preferably turn on the laser, and while moving the sample with respect to the material we monitor $I_{corr}(z,t)$ and adjust the laser power using a control loop such as PID to keep it close to a target value. Therefore, we write a line or curve inside the material.

These dots and lines are combined to generate 3D-shaped optical modifications inside the material.

Figures 8a-c show the repeatability and depth dependence.

As we focus deeper into the sample (see Fig. 6a), the annealing process gets slower since the optical power is decreasing. Figures 8b shows that there is about 30ms of variation both in starting time of annealing and starting time of rise. As we stretch the time of cc at different depth (see Figure 8c), we get similar curves. Initial intensities are close, but middle intensities get lower as we go deeper. Photoluminescence and/or scattering intensity may be temperature dependent.

Preferred features

A preferred step is to induce local annealing inside a material by using a low-power QCW laser of wavelength at which the material is slightly absorbing with an absorption coefficient <1cm$^{-1}$. In this way, the laser can be focused well inside the material without causing any modification therein. Annealing can occur only at the focal spot of the laser where its power is highest. Here, the absorption is sufficient to heat up the material. During this localized annealing, both the absorption coefficient and the refractive index of the material can increase more than 100x. These modifications are permanent unless the material undergoes additional processing steps (e.g., further annealing, and/or interaction with chemicals/etchants).

The instrument preferably consists of a home-built microscope with a motorized sample stage that allows movement of the sample made of the material of interest with respect to the focal spot of the writing laser. Alternatively, the laser beam can be moved with respect to the sample, kept fixed. The material modification occurring at the laser focal spot is monitored in real time by an imaging system that can detect both scattered laser light and eventual fluorescence resulting from the local annealing. Specifically, our software preferably analyses continuously the peak intensity and the width of the spot size induced by the writing process. Those two parameters are related to the modification of the material properties and the software adjusts in real time the laser power settings to achieve the desired refractive index change repeatedly.

Execution example(s) of preferred embodiments

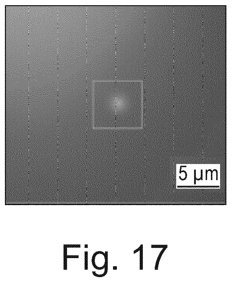

We conducted a study using a 1mm-thick slab of poly allyl diglycol carbonate (PADC, also called CR-39), a commercially available transparent material commonly used in glass spectacles. We chose this material as an exemplary case for our study as it is a commonly used and easily accessible material. To begin, we conducted numerical simulation to model the laser as a moving Gaussian beam, which causes a temperature rise in the material around the focal spot of the laser due to optical absorption. This heating process induces a modification in the material which we can model using the well-known Arrhenius equation. The simulations (Fig. 3) showed that it is possible to generate a localized refractive index change even smaller than the spot size of the focused laser beam, i.e. below the diffraction limit (Fig. 4 and Fig. 5). We then turned to experimentation to physically test our findings. We focused a single-mode laser-diode with a wavelength of 410 nm with an objective inside the slab of PADC, at a depth that could be adjusted by mounting the sample on a manual micrometric stage. The laser settings (intensity modulation, peak power) were controlled by sending a voltage signal from a waveform generator to the laser current-driver. Upon exposure, the optical properties of the sample were modified and exhibited a point-like defect that could be imaged with a standard optical microscope as a scattering point inside the material (Fig. 17). The process was repeated at different positions inside the slab, repeatedly showing the same result. Different laser power settings correspond to different modifications (size and shape of the point-like defect, scattering properties of the defect) suggesting that full control over the value of the refractive index modification is possible.

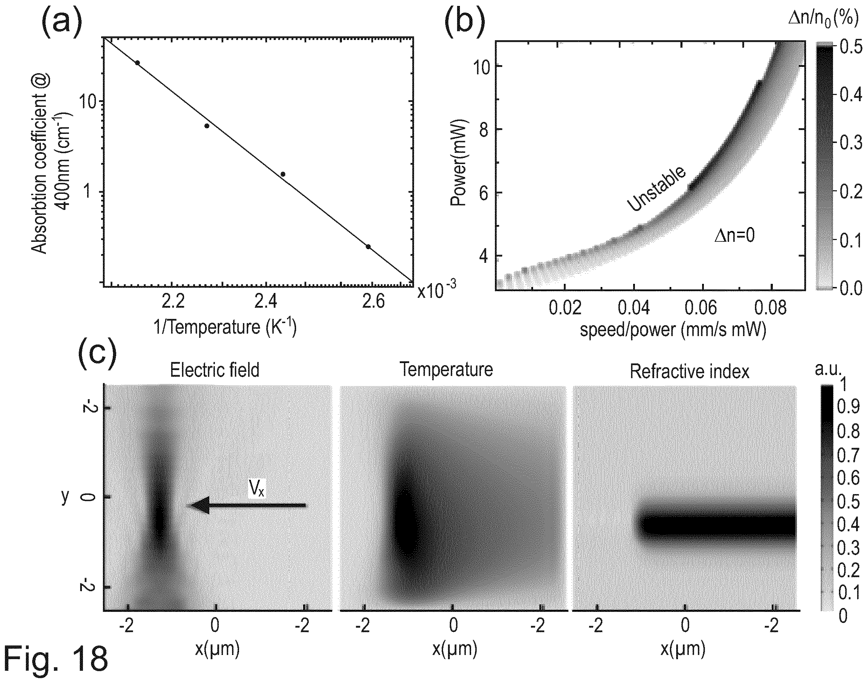

Fig. 18 shows a steady-state simulation of annealing due to a moving laser beam: (a) Change of optical absorption coefficient with the inverse of the annealing temperature after 1h annealing. (b) Simulated steady-state peak refractive index change as a function of optical power and beam speed/power ratio. (c) Simulation results of the modification of the material using a Gaussian focused laser beam. From left to right, the electric field of the focused laser at the cross-section of the beam, elevated temperature distribution due to optical absorption, and the resulting change of the refractive index.

Fig. 17 shows a microscope image of one annealed spot within the poly allyl diglycol carbonate slab and induced at the focal area of the QCW laser.

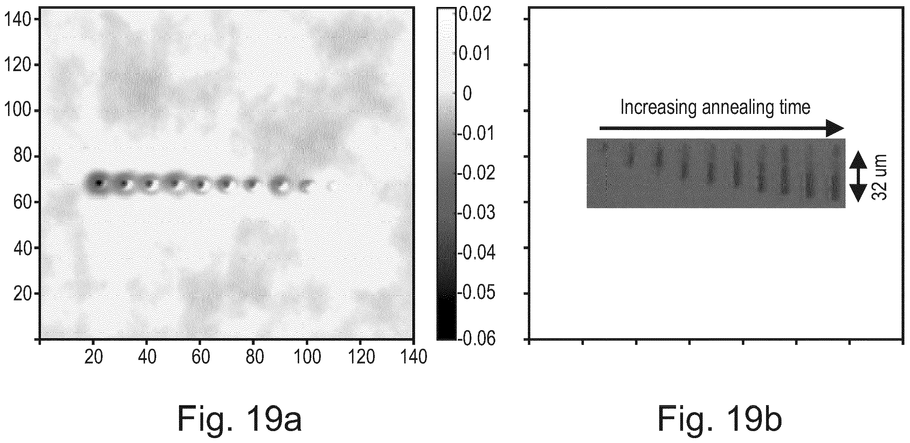

Figure 19a-b shows an array of dots we wrote with increasing annealing times. The first image is the side view, which is taken perpendicular to the axis at which the laser beam is focused. For longer times, the annealed zone becomes more elongated. This is due to self-guiding of the laser light. As the laser increase the refractive index, it creates a waveguide in which itself is guided. The figure on the right is the quantitative phase image of the sample and shows the phase shift of light at 450 nm due to the annealed material.

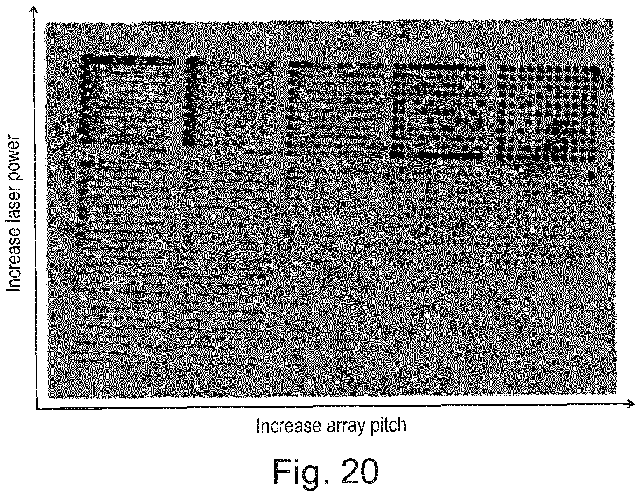

Our device is a home-built microscope with a laser diode emitting 10mW at 410 nm. The laser is focused inside the target material through a 20x objective with 0.45NA. A custom software program controls the writing process, allowing laser parameters to be set and a 3D motorized sample-stage to be moved based on a pre-generated design file. So far, tests have been carried out with a design of 50 um x 50 um squares, consisting of an array of dots with different pitches to create straight lines (see Figures 20). The variability in size and contrast of the printed patterns indicates differences in the local refractive index. Variation within the same square shows the proximity effect.

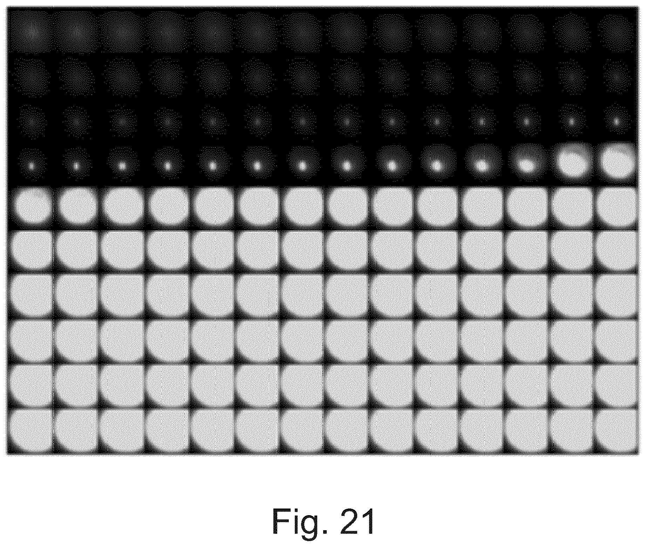

To correct for this effect during writing, we use a camera to record in real time the scattered laser light (or fluorescence) resulting from the annealing process at the laser focal spot (Fig. 21). The trend of the peak intensity (or full width at half maximum over time) at a given depth within the material is characteristic (Fig. 8a) and can therefore be used to adjust the power settings in a feedback loop.

Illustrations

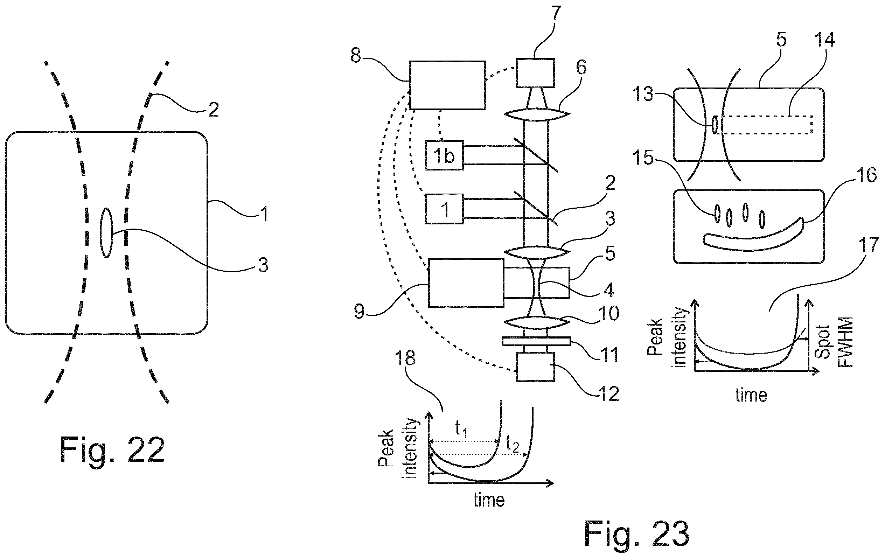

Figure 1 shows absorption features of a highly viscous target material 5, hereinafter also referred to as sample 5, (see Figures 22 and 23) suitable for local photo-induced annealing using a QCW laser with writing wavelength (WW) 200. At the laser focal spot 13 (see Figures 22 and 23), the material initially absorbs only a small portion of the optical power. Therefore, it is possible to focus the laser at almost arbitrary depths within the material. At the focal point 13, the optical absorption causes heating that itself induces an increase of the absorption coefficient (see Figure 1) and of the real part of the refractive index (see Figure 2) at the writing wavelength and at a wavelength higher than the writing wavelength.

Figure 23 shows an exemplary embodiment of a system capable of carrying out the invention. Reference numeral 1 designates a collimated single-mode laser diode at the writing wavelength (WW). It is sent to the sample 5 by a dichroic mirror 2 reflective at the writing wavelength. The laser light is focused (see reference numeral 4) by a lens or objective 3 on the sample 5. Laser-induced modification at the focal spot 13 translates into photoluminescence and/or scattered light from the sample 5. This signal is collected by the same lens or objective 3, is transmitted by the dichroic mirror 2, and is then imaged on a camera 7 connected to a computer 8. Additional optical elements 6 could be inserted along the detection path to improve the detection of the signal of interest. The sample is mounted on a 3D micrometric motion stage 9 which acts an adjustment unit and moves the sample in space with coordinates (x, y, z) specified on a file generated by dedicated software that translates the desired final shape into spatial position over time 14. This software analyzes in real-time the image of the annealed spot, whose intensity profile - specifically the peak intensity and the full-width-half-maximum - follow a characteristic curve 17 that is used to adjust the laser settings to obtain the desired refractive index modification along the whole 3D pattern. The invention can be used to draw arbitrary 3D patterns made of dots 15 and/or lines 16 of desired refractive index within the material of choice. We use time constants 18 to determine and equalize the actual optical power reaching the focal spot 13.

Development stage of exemplary embodiments of the invention

Exemplary embodiments of the invention are currently tested on poly allyl glycol carbonate samples with different characteristics (curved and flat samples, with and without anti-reflective coating). Structures such as dots and lines have been written at arbitrary depths and positions inside the material: max depth demonstrated so far is equal to 2 mm.

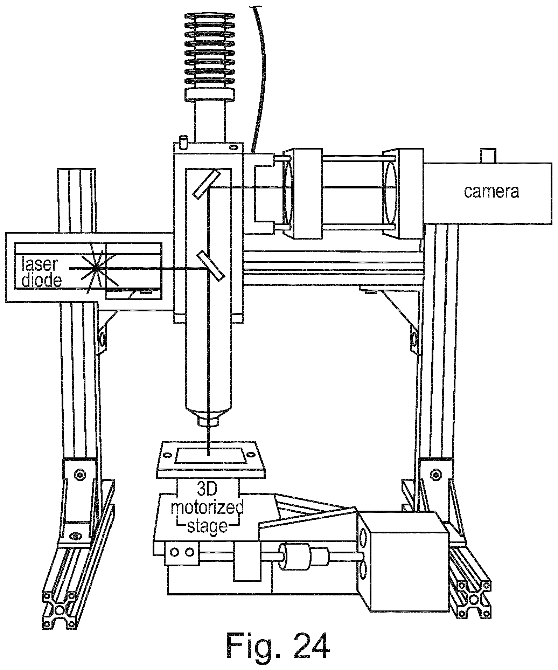

A prototype of the instrument equipped with a control-loop system has been designed and implemented and shown in Figure 24. It was used to fabricate the patterns in curved samples of polyallyldiglycolcarbonat.

Products which may use exemplary embodiments of the invention

Exemplary embodiments of the invention could be used to produce arbitrary 3D patterns of refractive index modification in different materials, with samples of different shapes and geometry (flat slab, curved slab, fiber), in both solid and gel phases. For the latter case, interesting candidates are polyvinyl alcohol and polydimethylsiloxane, which could be annealed using a single-mode laser-diode with a wavelength between 400 nm - 410 nm and optical power of 10s of mW. Both materials are widely employed in microfluidic and bio-medical applications: local modification of their refractive index could be used to fabricate microfluidic devices upgraded for optical sensing (so-called lab-on-a-chip) or personalized contact lenses. At higher optical powers, material carbonization can be reached: this effect could also be used to fabricate customized spatial selectors that are optical components used in microscopy to attenuate/block (broadband) light propagation. The chemical modification induced by the localized heating could also affect the mechanical properties of the material or reduce its chemical resistance to solvents/etchant agents at the microscale. These effects could be exploited to fabricate optomechanical microdevices for e.g., sensing applications, or microscopic scaffolds for e.g., cell growth.

The invention can be used to repeatedly fabricate customized optical and integrated photonic components in transparent materials with arbitrary 2D and 3D patterns with micrometric resolution. Examples include, but are not limited to:

- Line gratings
- Holograms
- Flat lenses
- Optical waveguides
- Spatial selectors (through carbonization)
- Fiber optic phase plates
- Optical ring resonators
- 2D to 1D image converter
- Holographic lens
- Optical physical unclonable functions (PUFs)
- Micro-lens for diode and fiber laser collimation
- Laser scanner
- Chip-to-optical fiber coupler
- optical storage
- functional/technical engraving for product identification
- branding (visible and invisible engraving): brand protection and anti-counterfeiting

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa.

Whenever the context requires, all options that are listed with the word "and" shall be deemed to include the word "or" and vice versa, and any combination thereof.

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

Further, the applicant would like to emphasize that each feature of each of the following dependent claims may be combined with any of the present independent claims as well as with any other (one or more) of the present dependent claims (regardless of the present claim structure). Therefore, the applicant may direct further patent claims towards other claim combinations at a later stage of the prosecution.

**Claims**

1. Method for modifying the refractive index characteristics of a target material (5) by targeting a specific region within the target material (5), the method comprising the step of generating laser light with a laser (1) and focussing the laser light inside the target material (5),
   **characterized in that**

   the material modification occurring at a focal spot (13) of the laser light is monitored in real time by an imaging system (7) and
   laser (1) power settings of the laser (1) are adjusted in real time to achieve a desired refractive index change.

2. Method of claim 1 wherein
   the laser (1) is operated in a quasi-continuous mode to adjust the laser (1) power settings in real time.

3. Method of any of the preceding claims wherein
   the laser light is generated by a continuous wave laser (1) which is modulated on a time scale longer than one nanosecond.

4. Method of any of the preceding claims wherein
   the image system detects radiation from the laser's focal point (13).

5. Method of claim 4 wherein
   software continuously analyses the peak intensity and/or the width of the spot size of the detected radiation and adjusts in real time the laser power settings of the laser (1).

6. Method of claim 5 wherein
   the software follows a given characteristic curve that is used to adjust the laser settings along the whole of a given 3D pattern.

7. Method of any of the preceding claims wherein
   the radiation detected by the imaging system (7) is or at last includes fluorescence resulting from the local annealing and/or from the refractive index modification induced at the laser's focal point (13).

8. Method of any of the preceding claims wherein
   the radiation detected by the imaging system (7) is or at last includes scattered laser light resulting from the local annealing and/or from the refractive index modification induced at the laser's focal point (13).

9. Method of any of the preceding claims wherein
   the radiation detected by the imaging system (7) is or at last includes detected radiation originating from an additional radiation source.

10. Method of claim 9 wherein
    the detected radiation that originates from the additional radiation source, has passed the focus point (13) before the detection by the image system.

**11.** Method of any of the preceding claims further comprising the steps of

carrying out a numerical simulation to model the laser light as a moving Gaussian beam, which causes a modelled temperature rise in the target material (5) around the laser's focal spot (13) due to optical absorption, wherein the modelled temperature rise induces a modelled modification of the target material (5) and wherein the modelled modification of the target material (5) is calculated using the Arrhenius equation, and
selecting the laser power settings in view of the results of the numerical simulation.

**12.** Method of any of the preceding claims wherein
the modification of the refractive index is caused by a temperature rise of the target material (5) in response to the laser light absorption at the laser's focal spot (13).

**13.** Method of any of the preceding claims wherein

- the laser (1) is a diode laser (1) and/or
- the wavelength of the laser light is chosen to be at the band gap edge of the target material (5) and/or
- laser (1) generates blue or ultraviolet light and/or
- the laser (1) peak power is below 1 W and/or
- the laser (1) fluence is below 1 mJ/$\mu$m$^2$ and/or
- the laser (1) power is increased with increasing depth of the focal point inside the target material (5) according to a pre-defined mathematical calibration function.

**14.** Method of any of the preceding claims

- wherein the absorption characteristic curve of the material has an absorption band edge that non-linearly shifts to longer wavelengths with annealing time and temperature according to Arrhenius equation and
- wherein the wavelength of the laser light is chosen to be at or above the initial absorption band edge before the modifying of the refractive index characteristics starts and is then not changed during the process.

**15.** System configured to modify the refractive index characteristics of a target material (5), the system comprising a laser (1) for targeting a specific region within the target material (5),
**characterized by**

an image system (7) configured to monitor the material modification occurring at the laser's focal spot (13) in real time and
an adjustment unit (9) configured to adjust the laser (1) power settings of the laser (1) in real time in response to the monitored material modification in order to achieve a desired refractive index change.

Fig. 1

Fig. 2

Fig. 3

Fig. 4

Fig. 5

EP 4 427 876 A1

Fig. 6

Fig. 7

Fig. 8a

Fig. 8b

Fig. 8c

EP 4 427 876 A1

DC=35% f=200kHz

Fig. 9

EP 4 427 876 A1

Fig. 10

Fig. 11

| Model | Line |
|---|---|
| Equation | y = A + B*x |
| Plot | B |
| A | -2653934.46374 ± 38842.0081 |
| B | 482439.53894 ± 6999.64198 |
| Reduced Chi-Sqr | 265109.75038 |
| R-Square (COD) | 0.99165 |
| Adj. R-Square | 0.99144 |

Linear

| Model | ExpDecay2 |
|---|---|
| Equation | y=y0+A1*exp(-(x-x0)/t1) + A2*exp(-(x-x0)/t2) |
| Plot | B |
| y0 | 5275.33509 ± 1.91332 |
| x0 | 0.04564 ± 8485.15322 |
| A1 | 835.64644 ± 8.30982E7 |
| t1 | 0.08533 ± 0.00204 |
| A2 | 1012.40968 ± 1.20384E7 |
| t2 | 0.71359 ± 0.00846 |
| Reduced Chi-Sqr | 1384.8755 |
| R-Square (COD) | 0.98724 |
| Adj. R-Square | 0.98722 |

Double exp decay

| Model | ExpGrow2 |
|---|---|
| Equation | y=y0+A1*exp((x-x0)/t1) + A2*exp((x-x0)/t2) |
| Plot | B |
| y0 | 5284.5688 ± 2.67653 |
| x0 | 4.64867 ± 9285.04907 |
| A1 | 2.47397E-6 ± 0.54559 |
| t1 | 0.0421 ± 5.43691E-4 |
| A2 | 588.22085 ± 9390991.962 |
| t2 | 0.58158 ± 0.00321 |
| Reduced Chi-Sqr | 2687.00156 |
| R-Square (COD) | 0.99585 |
| Adj. R-Square | 0.99584 |

Double exp growth

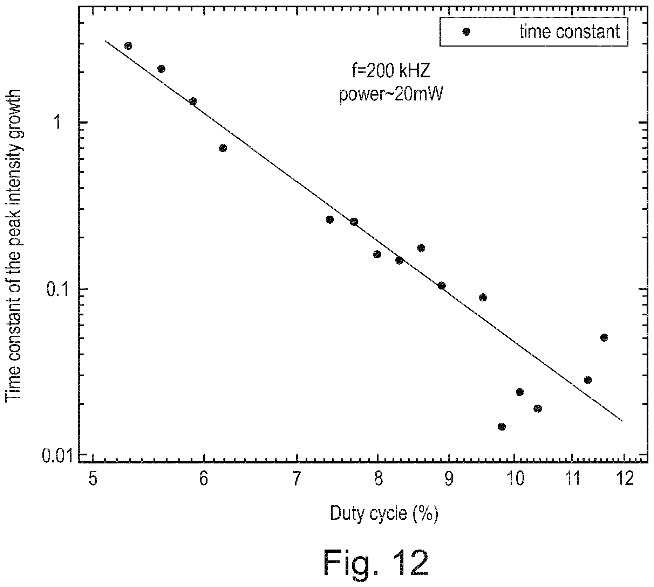

Fig. 12

f=20 kHZ peak power ~20mW at sample

Duty cycle (%)
——— 5
——— 7
——— 8
——— 9
——— 10
——— 12

Second moment

Time (s)

Fig. 13

Fig. 15

Fig. 14

Fig. 16

EP 4 427 876 A1

Fig. 17

Fig. 18

Fig. 19a

Fig. 19b

Increase array pitch

Increase laser power

Fig. 20

Fig. 21

Fig. 23

Fig. 22

Fig. 24

Europäisches
Patentamt

European
Patent Office

Office européen
des brevets

# EUROPEAN SEARCH REPORT

Application Number

EP 24 15 7285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 509 168 B2 (UNIV AIX MARSEILLE [FR]; CENTRE NAT RECH SCIENT [FR]) 17 December 2019 (2019-12-17) | 1,4-6, 8-10,15 | INV. B23K26/00 B23K26/03 |
| Y | * column 10, line 40 - column 11, line 46; claims 1,5,13 * * column 14, lines 8-28 * | 2,3,11, 12 | B23K26/0622 B23K26/06 B23K26/53 B23K31/12 |
| X | US 11 571 336 B2 (UNIV ROCHESTER [US]) 7 February 2023 (2023-02-07) | 1,4-8, 13-15 | B23K101/00 B23K26/55 |
| Y | * column 1, lines 14-22; claims 1,2,4,14,15,17-19 * * page 6, line 50 - page 7, line 55 * * column 10, line 42 - column 11, line 60 * | 2,3,11, 12 | B23K103/00 B23K26/60 |
| Y | SAHOO ANUBHAB ET AL: "All-optical investigations of intense femtosecond pulse ionization in transparent dielectrics with applications", JOURNAL OF OPTICS, INSTITUTE OF PHYSICS PUBLISHING LTD, GB, vol. 24, no. 6, 29 April 2022 (2022-04-29) , XP020422288, ISSN: 2040-8978, DOI: 10.1088/2040-8986/AC60BA [retrieved on 2022-04-29] * Sections 5 and 7 * | 11,12 | |

**TECHNICAL FIELDS SEARCHED (IPC)**

B23K

The present search report has been drawn up for all claims

| Place of search | Date of completion of the search | Examiner |
|---|---|---|
| Munich | 18 July 2024 | Schloth, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                  

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 7285

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2024

| Patent document cited in search report | | Publication date | Patent family member(s) | | Publication date |
|---|---|---|---|---|---|
| US 10509168 | B2 | 17-12-2019 | EP | 3475742 A1 | 01-05-2019 |
| | | | FR | 3053155 A1 | 29-12-2017 |
| | | | JP | 7062005 B2 | 02-05-2022 |
| | | | JP | 2019527383 A | 26-09-2019 |
| | | | US | 2019265412 A1 | 29-08-2019 |
| | | | WO | 2018002061 A1 | 04-01-2018 |
| US 11571336 | B2 | 07-02-2023 | AU | 2019212630 A1 | 17-09-2020 |
| | | | CA | 3089482 A1 | 01-08-2019 |
| | | | CN | 111936095 A | 13-11-2020 |
| | | | CN | 117064633 A | 17-11-2023 |
| | | | EP | 3740177 A1 | 25-11-2020 |
| | | | KR | 20200122329 A | 27-10-2020 |
| | | | KR | 20240096865 A | 26-06-2024 |
| | | | US | 2021052425 A1 | 25-02-2021 |
| | | | US | 2023149216 A1 | 18-05-2023 |
| | | | WO | 2019147952 A1 | 01-08-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. KUMAR.** *Radiation Effects and Defects in Solids,* 2011, vol. 166, 109-113